# EUROPÄISCHE PATENTANMELDUNG

(11) **EP 1 577 726 A1**
(43) Veröffentlichungstag der Anmeldung: **21.09.2005**
(21) Anmeldenummer: 04006301.8
(22) Anmeldetag: 17.03.2004
(51) Int. Cl.: G05B 19/418, G05B 15/02

(54) **System und Verfahren zur Überwachung und Bewertung von Kennwerten in einem technischen Prozess**

(71) Anmelder: ABB RESEARCH LTD., 8050 Zürich (CH)
(72) Erfinder: Horch, Alexander, Dr., 69121 Heidelberg (DE); Vogelbacher, Lothar, 68782 Brühl (DE); Reismann, Olaf, 68519 Viernheim (DE)
(74) Vertreter: Miller, Toivo

(57) **Zusammenfassung**

Die Erfindung bezieht sich auf ein System und ein Verfahren zur Überwachung und Bewertung von Kennwerten in einem technischen Prozess einer technischen Anlage, insbesondere einer Produktionsanlage, wobei eine Erfassungseinheit (10) zur Erfassung der Messdaten des technischen Prozesses vorgesehen ist, die Erfassungseinheit (10) mit einem Klassifizierer (20) zusammenwirkt, welcher aus den von der Erfassungseinheit (10) erfassten Messdaten unter Berücksichtigung von im Klassifizierer (20) vorhandenen Informationen über Eigenschaften von Produkten, von Produktqualitäten, von Produktionsparametern, von Arbeitsbereichen und/oder von Prozesszuständen des technischen Prozesses klassifizierte Messdaten ermittelt, und der Klassifizierer (20) mit einer Verarbeitungseinheit (30) zusammenwirkt, welche aus den klassifizierten Messdaten klassifizierte Kennwerte erzeugt.

## Beschreibung

Die Erfindung betrifft System und ein Verfahren zur Überwachung und Bewertung von Kennwerten und Gütezahlen, insbesondere der Regelkreisgüte in Regelkreisen in einem technischen Prozess einer technischen Anlage.

Um die Regelgüte von Regelkreisen zu beschreiben und zu bewerten, werden üblicherweise eine Vielzahl von Messdaten mit Hilfe von Messprotokollen aus einer technische Anlage ermittelt und mittels unterschiedlicher Verarbeitungsverfahren, wie beispielsweise statistischer Methoden in Kennwerte umgesetzt. Die ermittelten Kennwerte werden zur Bewertung von Teilen des technischen Prozesses, insbesondere der Regelgüte der entsprechenden Regelkreise verwendet.

Eine kontinuierliche über einen längeren Zeitraum ablaufende Überwachung technischer Teilprozesse, wie auch des Gesamtprozesses der technischen Anlage wird mittels einer kontinuierlichen Ermittlung der Kennwerte der technischen Anlage realisiert, wodurch insbesondere die kontinuierliche Überwachung der Regelgüte und somit der Leistungsfähigkeit und der Qualität des technischen Prozesses erfolgt.

Gegenwärtig eingesetzte Verfahren, welche aus verfügbaren Messdaten und daraus ermittelten Kennwerten Rückschlüsse auf die Regelgüte und die diese Größe beeinflussenden Vorgänge erlauben, sind in S.J. Qin, "Control Performance Monitoring - a review and assessment" , Computers & Chemical Engineering, 23, pp. 178-186, July 1998 und in R. Dittmar, M. Bebar und G. Reinig, "Control Loop Performance Monitoring - Motivation, Methoden, Anwenderwünsche", atp - Automatisierungstechnische Praxis, Vol. 45, Heft 4, 2003. veröffentlicht.

Auch eine kontinuierliche Überwachung von technischen Prozessen und Anlagen ist bekannt und in M.A. Paulonis, J.W. Cox, "A practical approach for large-scale controller performance assessment, diagnosis and improvement", Journal of Process Control, Vol. 13, pp. 155-168, 2002 beschrieben.

Jedoch führt die kontinuierliche Überwachung der Regelgüte, insbesondere während des Übergangs zwischen unterschiedlichen Arbeitsbereichen oder Prozesszuständen, zu ungenauen und oft auch zu nicht verwertbaren Ergebnissen, da sich die Qualität der ermittelten Regelgüte für die unterschiedlichen Arbeitsbereiche oder Prozesszustände unterscheidet. Es existiert kein Kriterium, welches die ermittelten Kennwerte nach unterschiedlichen Arbeitsbereichen oder Prozesszuständen sortiert und auswertet.

In diskontinuierlichen Prozessen, sogenannten Batchprozessen, in der chemischen Industrie oder bei der Arzneimittelherstellung wird die Überwachung von Produktkenngrößen durchgeführt, um Aussagen über die Qualität oder Zusammensetzung der Produkte zu erhalten und damit auf Abweichungen im Produktionsprozess zu reagieren oder die Ausbeute zu erhöhen.

Bei der Überwachung von Batchprozessen arbeiten die verwendeten Regler in verschiedensten Arbeitsbereichen, beispielsweise in unterschiedlichen Temperaturbereichen, wodurch bei einer meist linearen Reglerstruktur die Regler in den verschiedenen Arbeitsbereichen typischerweise auch unterschiedliche Regelgüten aufweisen. Eine Reglerüberwachung, die nach diesen unterschiedlichen Arbeitsbereichen nicht differenziert wird, liefert daher eine sehr ungenaue Analyse. Wie bei den oben beschriebenen kontinuierlichen Anlagen gibt es bisher kein Verfahren, das die Analyse der Regelgüten nach Arbeitsbereichen unterteilt.

Ausgehend von diesem Stand der Technik liegt der Erfindung die Aufgabe zugrunde, ein System und ein Verfahren zur Überwachung und Bewertung von Kennwerten, insbesondere der Regelgüte in Regelkreisen oder der Produktkenngrößen in einem technischen Prozess einer technischen Anlage anzugeben, wodurch die vorgenannten Nachteile des Standes der Technik vermieden werden.

Diese Aufgabe wird erfindungsgemäß durch ein System der eingangs genannten Art mit den in Anspruch 1 angegebenen Merkmalen gelöst. Vorteilhafte Ausgestaltungen, Verbesserungen des erfindungsgemäßen Systems und ein Verfahren sind in weiteren Ansprüchen und in der Beschreibung angegeben.

Das erfindungsgemäße System zur Überwachung und Bewertung von Kennwerten, insbesondere der Regelgüte in Regelkreisen oder der Produktqualität in einem technischen Prozess einer technischen Anlage, insbesondere in einer Produktionsarilage, weist eine Erfassungseinheit zur Erfassung der Messdaten eines technischen Prozesses auf, welche mit einem Klassifizierer zusammenwirkt.

Der Klassifizierer erkennt oder ermittelt aus den von der Erfassungseinheit erfassten Messdaten unter Berücksichtigung von im Klassifizierer vorhandenen Informationen über unterschiedliche Arbeitsbereiche oder Prozesszustände des technischen Prozesses klassifizierte Messdaten, indem der Klassifizierer beispielsweise den Arbeitsbereichen oder den Prozesszuständen zugeordnete vordefinierte Klassen auswählt und die erfassten Messdaten für die verschiedenen Arbeitsbereiche oder Prozesszustände den vordefinierten Klassen zuordnet.

Mittels der ausgewählten Klassen ist in vorteilhafter Weise eine weitere Verarbeitung, insbesondere eine Darstellung und/oder Speicherung der Messdaten durchführbar.

Alternativ ist es auch möglich, dass vom Klassifizierer die erfassten Messdaten festgelegten Parameterwerten wie beispielsweise Produkteigenschaften, Produktqualitäten, Produktionsparametern, wie beispielsweise der Verarbeitungstemperatur, zugeordnet werden.

Die Informationen über die Arbeitsbereiche oder Prozesszustände sind vorzugsweise im Klassifizierer hinterlegt. Alternativ können die Informationen für die Klassifizierung der ermittelten Messdaten nach den unterschiedlichen Arbeitsbereichen oder Prozesszuständen auch, beispielsweise mittels externer Speichermedien, von außen in den Klassifizierer übertragen werden.

Für die weitere Verarbeitung der ermittelten Messdaten und ihrer Zuordnung zu den unterschiedlichen Produkteigenschaften, Produktqualitäten, Produktionsparametern, Arbeitsbereichen und/oder Prozesszuständen wirkt der Klassifizierer mit einer Verarbeitungseinheit zusammen, welche aus den klassifizierten Messdaten klassifizierte Kennwerte erzeugt und die Kennwerte sortiert nach den unterschiedlichen Produkteigenschaften, Produktqualitäten, Produktionsparametern, Arbeitsbereichen und/oder Prozesszuständen einer Auswerte- und Anzeigeeinheit zuführt.

Die Auswerte- und Anzeigeeinheit ist dafür vorgesehen, die mittels der Verarbeitungseinheit ermittelten und nach den unterschiedlichen Produkteigenschaften, Produktqualitäten Produktionsparametern, Arbeitsbereichen und/oder Prozesszuständen klassifizierten Kennwerte zu speichem, zu bewerten und/oder zu überwachen.

Weiterhin ist die Auswerte- und Anzeigeeinheit zur Darstellung der nach den unterschiedlichen Produkteigenschaften, Produktqualitäten, Produktionsparametern, Arbeitsbereichen und/oder Prozesszuständen klassifizierten Kennwerte vorgesehen.

Das Verfahren mit dem die Aufgabe weiterhin gelöst wird, ist dem Anspruch 11 zu entnehmen. Dabei werden mittels einer Erfassungseinheit die Messdaten eines kontinuierlichen oder diskontinuierlichen technischen Prozesses erfasst und die erfassten Messdaten mittels eines Klassifizierers unter Berücksichtigung von im Klassifizierer vorhandenen Informationen über Eigenschaften von Produkten, von Produktqualitäten, von Produktionsparametern, von Arbeitsbereichen und/oder von Prozesszuständen des technischen Prozesses, klassifizierte Messdaten, ermittelt.

Aus den klassifizierten Messdaten, welche mittels des Klassifizierers den unterschiedlichen Produkteigenschaften, Produktqualitäten, Produktionsparametern, Arbeitsbereichen und/oder Prozesszuständen zuordnet sind, werden mittels einer Verarbeitungseinheit klassifizierte Kennwerte erzeugt, welche nach unterschiedlichen Produkteigenschaften, Produktqualitäten, Produktionsparametern, Arbeitsbereichen und/oder Prozesszuständen sortiert werden.

Dazu wird beispielsweise während einer kontinuierlichen Ermittlung der Kennwerte aus der Messdatenerfassung mittels des Klassifizierers festgestellt, in welchem der vordefinierten Arbeitsbereiche oder Prozesszustände sich der technische Prozess oder die technische Anlage augenblicklich befindet.

Nachdem die Ergebnisse der Kennwertbewertung, insbesondere die Bewertung der Produktkenngrößen oder die Bewertung der Kennwerte für die Regelgüte, einer Produkteigenschaft, einer Produktqualität, Produktionsparametern, einem Arbeitsbereich und/oder einem Prozesszustand, mittels zuvor festgelegter Parameterwerte oder zuvor definierten Klassen eindeutig zugeordnet wurden, werden Ergebnisse der Kennwertbewertung, insbesondere nach einer längeren Überwachungsphase, sortiert nach den unterschiedlichen Arbeitsbereichen oder Prozesszuständen von einer Auswerte- und Anzeigeeinheit gespeichert.

In einer vorteilhaften Weiterbildung der Erfindung werden die nach den unterschiedlichen Arbeitsbereichen oder Prozesszuständen klassifizierten Kennwerte mittels der Auswerte-und Anzeigeeinheit in bezug auf die unterschiedlichen Produkteigenschaften, Produktqualitäten, Produktionsparameter, Arbeitsbereiche und/oder Prozesszustände bewertet, dargestellt und/oder überwacht.

Der im erfindungsgemäßen System vorgesehene Klassifizierer ermöglicht somit in vorteilhafter Weise eine Zuordnung der ermittelten Kennwerte, insbesondere der Regelgüte oder der Produktsqualität, nach unterschiedlichen Produkteigenschaften, Produktqualitäten, Produktionsparametern, Arbeitsbereichen und/oder Prozesszuständen, wodurch nicht nur Informationen über die Kennwerte des Gesamtprozesses der technischen Anlage, sondern auch für Teilprozesse möglich sind und insbesondere eine Anpassung und/oder Optimierung der Teilprozesse aber auch der Produkteigenschaften, Produktqualitäten und/oder Produktionsparameter, durchführbar ist.

Von besonderem Vorteil ist, dass die Erfindung auf nahezu alle Kennwertbewertungssysteme kontinuierlicher oder diskontinuierlicher technischer Prozesse anwendbar ist, welche mit einer beliebigen Klassifizierung der Messdaten einhergehen.

Eine weitere Ausführungsform der Erfindung betrifft die Verwendung des erfindungsgemäßen Systems und Verfahrens für die Überwachung kontinuierlicher Prozesse, insbesondere die Überwachung von Regelkreisen in Kraftwerken sowie für die Überwachung diskontinuierlicher Prozesse, insbesondere die Überwachung von Produktkennwerten in Batchprozessen, welche beispielsweise in der chemischen Prozessindustrie oder bei Arzneimittelherstellung ablaufen.

Das vorgeschlagene Verfahren/System ist in vorteilhafter Weise auch bei der Analyse und Bewertung von Prozessteilen innerhalb der Batchprozesse anwendbar, da in diesen Prozessen die Zuordnung der klassifizierten Kennwerte der technischen Anlage für unterschiedliche Arbeitsbereiche oder Arbeitspunkte besonders wichtig ist.

Ein weiterer Vorteil der Erfindung ist die Bereitstellung sowohl der Messdaten für die Kennwertermittlung, insbesondere Soll-, Ist- und Stellgrößen im Regelkreis, als auch die Bereitstellung der Messdaten für die Klassifizierung entsprechend der unterschiedlichen Produkteigenschaften, Produktqualitäten, Produktionsparameter, Arbeitsbereiche und/oder Prozesszustände aus einer gemeinsamen Einheit, beispielsweise aus einem Prozessleitsystem (DCS). In Kraftwerken kann als Stellgröße sowohl der Stellungsbefehl als auch die Stellungsrückmeldung verwendet werden.

Anhand von den in den folgenden Figuren dargestellten Ausführungsbeispielen sollen die Erfindung sowie vorteilhafte Ausgestaltungen, Verbesserungen und weitere Vorteile der Erfindung näher erläutert und beschrieben werden.

### Es zeigen:

- **Fig. 1**: ein Ausführungsbeispiel des erfindungsgemäßen Systems zur Überwachung und Bewertung von Kennwerten unter Berücksichtigung unterschiedlicher Arbeitsbereiche oder Prozesszustände in einem technischen Prozess einer technischen Anlage, und
- **Fig. 2**: eine Darstellung einer aus den Kennwerten ermittelten Güte oder Qualität für eine Überwachungsphase über einen definierten Zeitbereich.

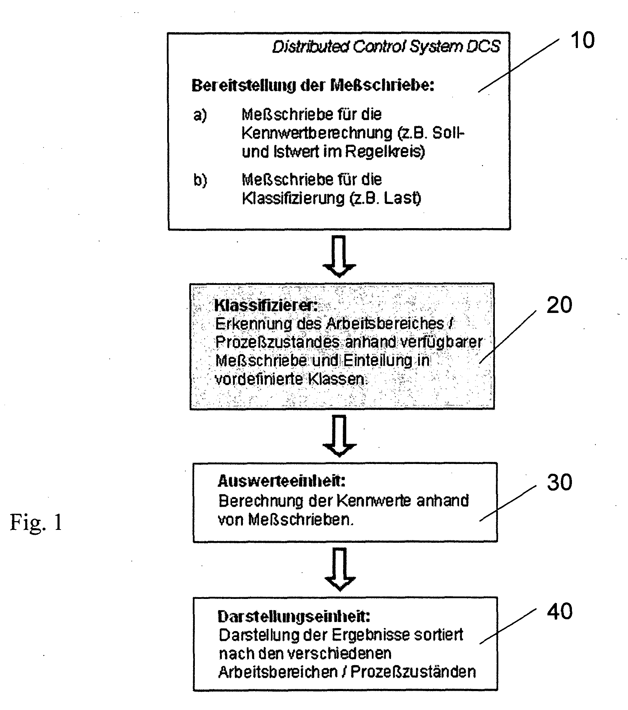

In der Fig. 1 ist ein Ausführungsbeispiel des erfindungsgemäßen Systems zur Überwachung und Bewertung von Regelkreisen unter Berücksichtigung unterschiedlicher Arbeitsbereiche oder Prozesszustände für einen technischen Prozess eines Kraftwerkes aufgezeigt.

Die in Messprotokollen erfassten Messdaten für die Kennwerterfassung, wie beispielsweise Soll- und Istwerte von Regelkreisen, und Messprotokolle für die Klassifizierung unterschiedlicher Arbeitsbereiche oder Prozesszustände, wie beispielsweise Anfahr-, Last- oder Abfahrbetrieb des Kraftwerksprozesses werden von einer Einfassungseinheit (10), welche als Prozessleitsystems (DCS) ausgeführt ist, zur Verfügung gestellt.

Die Erfassungseinheit (10) wirkt mit einem Klassifizierer (20) zusammen, wobei der Klassifizierer unterschiedliche Arbeitsbereiche oder Lastfälle, wie beispielsweise Anfahr-, Last-oder Abfahrbetrieb, erkennt, auswählt und vordefinierten Klassen zuordnet sowie eine Zuordnung der Messprotokolle mittels der gewählten Klasse durchführt.

Der Klassifizierer (20) übergibt die den vordefinierten Klassen zugeordneten Messprotokolle einer Verarbeitungseinheit (30).

Die Verarbeitungseinheit (30) ermittelt aus den klassifizierten Messprotokolle Kennwerte, sortiert die Kennwerte nach den unterschiedlichen Arbeitsbereichen oder Lastfällen und stellt die den Lastfällen zugeordneten Kennwerte einer Auswerte- und Anzeigeeinheit (40) zur Verfügung, welche die nach den unterschiedlichen Arbeitsbereichen oder Prozesszuständen sortierten Kennwerte speichert, bewertet, darstellt und/oder überwacht.

Anhand der Überwachung des Mittelwertes eines Regelfehlers aus der Beziehung eines Sollwertes zum Istwert in einem Regelkreis innerhalb des Kraftwerksprozesses wird eine weitere vorteilhafte Anwendung der Erfindung erläutert.

In einem Kraftwerk ist die Überwachung der Regelkreise unerlässlich, so dass Regelfehler regelmäßig ermittelt werden. Mittels des erfindungsgemäßen Systems erfolgt eine Klassifizierung beispielsweise anhand eines verfügbaren Signals der Kraftwerkslast. Daraus wird der ermittelte Mittelwert des Regelfehlers in den unterschiedlichen Lastfälle, wie Volllast, Schwachlast, Lastwechsel und Anfahrt zugeordnet.

Zur Klassifizierung der unterschiedlichen Lastfälle innerhalb des Kraftwerksprozesses werden Aussagen über das Verhalten des Regelkreises während der unterschiedlichen Lastfälle benötigt, um so zu erkennen, in welchen Bereichen die Regelkreisgüte besonders problematisch ist.

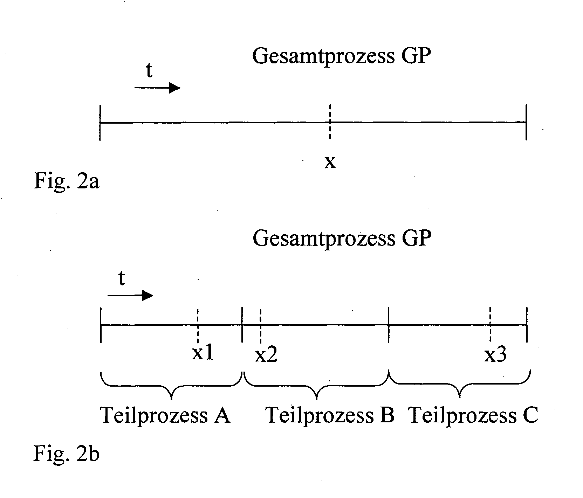

In der **Fig.** 2 ist eine Darstellung der aus den Kennwerten ermittelten Güte oder Qualität, im folgenden auch als Performance bezeichnet, x, x1, x2, x3 für eine Überwachungsphase über einen definierten Zeitabschnitt t aufgezeigt.

**Fig.** 2a zeigt eine Darstellung einer Gesamtperformance x über einen definierten Zeitabschnitt t ohne eine Zuordnung für einen bestimmten Arbeitsbereich. Diese Darstellung ermöglicht nur eine Aussage über die Lage der Gesamtperformance x auf einer definierten Skala in Zusammenhang mit dem Gesamtprozess GP.

In der Fig. 2b ist die Performance x1, x2, x3 nach einer längeren Überwachungsphase über einen definierten Zeitabschnitt t sortiert nach unterschiedlichen Arbeitsbereichen oder Teilprozessen A, B, C dargestellt, wobei die Performance jeweils für die Teilprozesse A, B, C differenziert beispielsweise folgendermaßen zugeordnet ist:
- Performance im Teilprozess A ist x1,
- Performance im Teilprozess B ist x2 und
- Performance im Teilprozess C ist x3.

Eine solche Darstellung ist für viele Anwendungsfälle in der Prozessindustrie sinnvoller als die in Fig. 2a aufgezeigte Präsentation der Gesamtperformance x für den Gesamtprozess GP.

Die Erfindung zur Überwachung und Bewertung von Kennwerten unter Berücksichtigung unterschiedlicher Arbeitsbereiche oder Prozesszustände in einem technischen Prozess einer technischen Anlage ist in fast allen Bereichen der Prozessindustrie anwendbar, welche mit einer beliebigen Klassifizierung von Messdaten einhergeht.

## Patentansprüche

1. System zur Überwachung und Bewertung von Kennwerten in einem technischen Prozess einer technischen Anlage, insbesondere einer Produktionsanlage, wobei
- eine Erfassungseinheit (10) zur Erfassung der Messdaten des technischen Prozesses vorgesehen ist,
- die Erfassungseinheit (10) mit einem Klassifizierer (20) zusammenwirkt, welcher aus den von der Erfassungseinheit (10) erfassten Messdaten unter Berücksichtigung von im Klassifizierer (20) vorhandenen Informationen über Eigenschaften von Produkten, von Produktqualitäten, von Produktionsparametern, von Arbeitsbereichen und/oder von Prozesszuständen des technischen Prozesses klassifizierte Messdaten ermittelt, und
- der Klassifizierer (20) mit einer Verarbeitungseinheit (30) zusammenwirkt, welche aus den klassifizierten Messdaten klassifizierte Kennwerte generiert.

2. System nach Anspruch 1, **dadurch gekennzeichnet, dass** die klassifizierten Kennwerte nach den unterschiedlichen Produkteigenschaften, Produktqualitäten, Produktionsparametern, Arbeitsbereichen und/oder Prozesszuständen sortiert sind.

3. System nach einem der vorherigen Ansprüche, **dadurch gekennzeichnet, dass** die Informationen über die Produkteigenschaften, Produktqualitäten, Produktionsparameter, Arbeitsbereiche und/oder Prozesszustände im Klassifizierer (20) hinterlegt sind.

4. System nach einem der Ansprüche 1 oder 2, **dadurch gekennzeichnet, dass** die Informationen über die Produkteigenschaften, Produktqualitäten, Produktionsparameter, Arbeitsbereiche und/oder Prozesszustände dem Klassifizierer (20) zuführbar sind.

5. System nach einem der vorherigen Ansprüche, **dadurch gekennzeichnet, dass** eine Auswerte- und Anzeigeeinheit (40) vorgesehen ist, welche die mittels der Verarbeitungseinheit (30) ermittelten und nach den unterschiedlichen Produktölgenschaften, Produktqualitäten, Produktionsparametern, Arbeitsbereichen und/oder Prozesszuständen sortierten Kennwerte speichert, bewertet, darstellt und/oder überwacht.

6. System nach einem der vorherigen Ansprüche, **dadurch gekennzeichnet, dass** die ermittelten und bewerteten Kennwerte ein Maß für die Regelgüte von Regelkreisen des technischen Prozesses sind.

7. System nach einem der Anspruche 1 bis 5, **dadurch gekennzeichnet, dass** die ermittelten und bewerteten Kennwerte die Produktkennwerte des technischen Prozesses sind.

8. System nach einem der vorherigen Ansprüche, **dadurch gekennzeichnet, dass** für die unterschiedlichen Arbeitsbereiche oder Prozesszustände vordefinierte Klassen vorgesehen sind, denen der Klassifizierer (20) die erfassten Messdaten zuordnet.

9. System nach einem der Ansprüche 1 bis 7, **dadurch gekennzeichnet, dass** der Klassifizierer (20) die erfassten Messdaten festgelegten Parameterwerten zuordnet.

10. System nach einem der vorherigen Ansprüche, **dadurch gekennzeichnet, dass** die Bereitstellung der Messdaten für die Kennwertermittlung und die Bereitstellung der Messdaten für die Klassifizierung entsprechend der unterschiedlichen Produkteigenschaften, Produktqualitäten, Produktionsparameter, Arbeitsbereiche und/oder Prozesszustände aus einer gemeinsamen Einheit, beispielsweise aus einem Prozessleitsystem (DCS), vorgesehen ist.

11. Verfahren zur Überwachung und Bewertung von Kennwerten in einem technischen Prozess einer technischen Anlage, wobei
- mittels einer Erfassungseinheit (10) die Messdaten des technischen Prozesses erfasst werden,
- mittels eines Klassifizierers (20) unter Berücksichtigung von im Klassifizierer (20) vorhandenen Informationen über Eigenschaften von Produkten, von Produktqualitäten, von Produktionsparametern, von Arbeitsbereichen und/oder von Prozesszuständen des technischen Prozesses aus den erfassten Messdaten, klassifizierte Messdaten generiert werden, und
- aus den klassifizierten Messdaten mittels einer Verarbeitungseinheit (30) klassifizierte Kennwerte erzeugt werden.

12. Verfahren nach Anspruch 11, **dadurch gekennzeichnet, dass** die klassifizierten Kennwerten nach unterschiedlichen Produkteigenschaften, Produktqualitäten, Produktionsparametern, Arbeitsbereichen und/oder Prozesszuständen sortiert werden.

13. Verfahren nach Anspruch 11 oder 12, **dadurch gekennzeichnet, dass** die Informationen über die Produkteigenschaften, Produktqualitäten, Produktionsparameter, Arbeitsbereiche und/oder Prozesszustände im Klassifizierer (20) hinterlegt werden.

14. Verfahren nach Anspruch 11 oder 12, **dadurch gekennzeichnet, dass** die Informationen über die Produkteigenschaften, Produktqualitäten, Produktionsparameter, Arbeitsbereiche und/oder Prozesszustände dem Klassifizierer (20) zugeführt werden.

15. Verfahren nach einem der Ansprüche 11 bis 14, **dadurch gekennzeichnet, dass** die mittels der Verarbeitungseinheit (30) ermittelten und nach den unterschiedlichen Produkteigenschaften, Produktqualitäten, Produktionsparametern, Arbeitsbereichen und/oder Prozesszuständen sortierten Kennwerte von einer Auswerte- und Anzeigeeinheit (40) gespeichert bewertet und/oder darstellt werden.

16. Verfahren nach Anspruch 11 oder 15, **dadurch gekennzeichnet, dass** aus den erfassten Messdaten die Regelgüte,von Regelkreisen des technischen Prozesses ermittelt wird.

17. Verfahren nach Anspruch 11 oder 15, **dadurch gekennzeichnet, dass** aus den erfassten Messdaten Produktkennwerte des technischen Prozesses ermittelt werden.

18. Verfahren nach Anspruch 11 bis 17, **dadurch gekennzeichnet, dass** die erfassten Messdaten für die unterschiedlichen Arbeitsbereiche oder Prozesszustände mittels des Klassifizierer (20) vordefinierten Klassen zugeordnet werden.

19. Verfahren nach Anspruch 11 bis 17, **dadurch gekennzeichnet, dass** die erfassten Messdaten mittels des Klassifizierers (20) festgelegten Parameterwerten zugeordnet werden.

20. Verwendung des erfindungsgemäßen Systems und Verfahrens nach einem der vorherigen Ansprüche für die Überwachung kontinuierlicher Prozesse, insbesondere für die Überwachung von Regelkreisen in Kraftwerken.

21. Verwendung des erfindungsgemäßen Systems und Verfahrens nach einem der Ansprüche 1 bis 19 für die Überwachung diskontinuierlicher Prozesse, insbesondere für die Überwachung von chemischen Prozessen oder bei der Arzneimittelherstellung.
